# NEW EUROPEAN PATENT SPECIFICATION

(11) **EP 2 392 443 B2**
(45) Date of publication and mention of the opposition decision: **28.06.2017**
(45) Mention of the grant of the patent: 04.12.2013
(21) Application number: 10735620.6
(22) Date of filing: 26.01.2010
(51) Int. Cl.: B29C 45/14, B29C 49/24, B29C 51/16, B32B 27/32, G09F 3/04, B32B 27/08

(54) **LABEL FOR IN-MOLD MOLDING**
ETIKETT ZUM GIESSEN IN GUSSFORMEN
ÉTIQUETTE POUR ÉTIQUETAGE DANS LE MOULE

(30) Priority: 30.01.2009 JP 2009019588
(43) Date of publication of application: 07.12.2011
(73) Proprietor: Yupo Corporation, Tokyo 101-0062 (JP)
(72) Inventor: SUZUKI, Tatsuya, Kamisu-shi Ibaraki 314-0102 (JP); IWASA, Yasuo, Kamisu-shi Ibaraki 314-0102 (JP); NAKAMURA, Kou, Kamisu-shi Ibaraki 314-0102 (JP)
(74) Representative: Zimmermann & Partner Patentanwälte mbB
(86) International application number: PCT/JP2010/000421
(87) International publication number: WO 2010/087148

(56) References cited:
- EP-A1- 0 500 944
- EP-A1- 0 650 816
- EP-A1- 1 176 003
- EP-A1- 1 865 482
- EP-B1- 0 950 511
- WO-A1-2006/053267
- WO-A1-2006/111448
- WO-A1-2009/010079
- JP-A- 2 084 319
- JP-A- 2001 030 342
- JP-A- 2001 030 342
- JP-A- 2006 168 355
- JP-A- 2006 168 355
- JP-A- 2006 276 848
- US-A- 5 435 963
- US-A- 5 885 721
- US-A- 6 165 576
- US-A1- 2002 037 969
- US-A1- 2003 067 099
- US-A1- 2004 146 731
- US-A1- 2006 198 991
- US-A1- 2007 003 777
- US-A1- 2007 282 071
- US-A1- 2008 063 835
- US-B1- 6 726 969
- PAPST F.: 'Kunststoff-Taschenbuch', vol. 26TH ED., 1995, SAECHTLING pages 366 - 375
- PAPST F.: 'Kunststoff-Taschenbuch', vol. 26TH ED., 1995, SAECHTLING pages 366 - 375
- Iwanami's Dictionary of Physics and Chemistry

## Description

### TECHNICAL FIELD

The present invention relates to a label to be struck to a container. In particular, the invention relates to a label to be used in in-mold molding of laneled containers by introducing a parison of a molten thermoplastic resin in a mol in which a label has been previously set followed by blow-molding it, or by injection-moluing a molted thermoplastic resin therein, cr by vacuum-forming and/or pressure-forming a molten thermoplastic resin sheet wherein.

### BACKGROUND ART

As a method of integral in-mold production of label-integrated resin-molded containers for producing resin-molded containers, heretofore employed is a so-called "in-mold molding method" that comprises previously inserting a label (or a blank) into a mold in which a container s molded, and then molding a container in the mold in a mode of blow molding, injection molding, differential pressure moieting or foammolding (for example, see Patent Reference 1, Patent Reference 2).
Many labels for use in such an in-mold molding method have a low transparency, but recently, labels having a high transparency have become needed. Accordingly, labels for in-mold molding having a high transparency have become investigated. For example, there have been proposed a label produced by coating a substrate of a transparent film formed by extrusion molding or calendar molding of a crystalline polypropylene or the like, with a solution of a low-melting-point olefin-based resin such as an ethylene/vinyl acetate Copolymer using a gravure coater or the like, and drying it to form a heat-sealable layer thereon; a label produced by directly laminating the substrate with a low-melting-point olefin-based iesin through coextrusion or extrusion lamination; and a label produced by further stretching the label, etc. (for example, see Patent Reference 3, Patent Reference 4). The substrate layer of the labels described in these patent references is formed of a crystalline polypropylene alone, or formed of a mixture of a crystalline polypropylene and a high-density polyethylene.

JP 2001030342 discloses an in-mold label made of polyolefin for stretch-blow molding. US 6,726,969 B1 relates to an in-mold label comprising a core layer with a first and second surface and a heat seal layer on the first surface of the core layer.

### CITATION LIST

Patent Reference 1: JP-A 58-69015
Patent Reference 2: JP-A 1-125225
Patient Reference 3: JP-A 2006-276848
Patent Reference 4: USP 2007/54091

### SUMMARY CF THE INVENTION

### PROBLEMS THAT THE INVENTION IS TO SOLVE

However, the conventional substrate layers for which high transparency has been sought as above lack in softness and have a high tensile strength, and therefore, whet a label having the substrate layer of the type is used in in-mold molding, then the lanel could not follow the deformation (shrinkage) of the container in cooling after molding and there often occurs a problem in that the labeled part may be dented or, by contraries, may be bulged to thereby detract from the shape or the container itself.
For solving the problem, a method has heretofore been employed in which the mold to be used is repeatedly modified until containers having the intended shape could be obtained while measuring the shape of the in-mold molded contairers. However, the method is extremely troublesome and takes a lot of time

Accordingly, a substrate material having a low tensile strength so as to be able to follow the container deformation in cooling after molding is needed However, when a substrate material having a low tensile strength (for example, a thin transparent film or the like) is used, it may face another problem in that there may occur outward appearance failures such as wrinkles (pock-like irregularities called orange peels or yuzu (Japanese citrus) peels) and blisters (partial swelling of label) that are intrinsic to labels for in-mold molding. For these reasons, it is not easy to provide a transparent label for in-mold molding that can be used with ease not causing any problem.

In consideration of the prior-art problems as above, an object of the invention ise to provide a transparent label for in-molding which, when stuck to a container, does not detract from the shape of the container and does not detract from the outward appearance of the label.

### MEANS FOR SOLVING THE PROBLEMS

Having assiduously studied for the purpose of solving the above-mentioned problems, the present inventors have found that, when a label is formed by the use of a substrate layer formed of a resin composition that satisfies a specific condition, then a labeled container can be molded in a mode of in-mold molding not detracting from the container shape and the label appearance, and have herein provided the present invention.

Concretely, the invention is a label for in-mold molding, which comprises a laminate configuration of a substrate layer and a heat-sealable layer, and in which the substrate layer is a stretched film formed of a resin composition containing an α-olefin-based copolymer having a melting point of from 135 to 160°C and a crystalline propylene-based resin having a melting point of from 130 to 160°C; and the label has an internal haze of from 1 to 30% (for a stack of ten labels) as measured according to JIS K7136. (In this, the melting point means the maximum peak (Tm) of the endothermic curve in differential scanning calorimetry.) The α-olefin-based copolymer is a polymer of a monomer mixture containing from 45 to 97 mol% of propylene and from 3 to 55 mol% of at least one selected from the group consisting of ethylene end α-olefins having 4 to 20 carbon atoms. Preferably, the substrate layer is a stretched film formed of a resin composition containing from 10 to 30% by weight of the α-olefin-based copolymer and from 70 to 90% by weight of the crystalline propylene-based resin. Also preferably, the melting heat quantity of the α-olefin-based copolymer is from 1 to 40 J/g.

Preferably, the label for in-mold molding of tre invention has a tensile strength, as measured according to JIS K7113, of from 30 to 150 kgf/cm, a tensile elasticity, as measured according to JIS K7113, of from 0.5 to 2 GPa, and a Clark stiffness, as measured according to JIS P8143, of from 5 to 20 cm³. Also preferably, the stretched film to constitute the substrate layer is a biaxially stretched film. Further preferably, the areal draw ratio of the stretched film is from 20 to 70 times. Also preferably, the heat-sealable layer is a stretched film formed of a resin composition containing an α-oletin-based copolymer. Preferably, the melting point (maximum peak of the endothermic curve in differential scanning calorimetry, Tm) of the resin composition to constitute the heat-sealable layer is lower by at least 5°C than the melting point of the resin composition two constitute the substrate layer.

### ADVANTAGE OF THE INVENTION

When the label for in-mold molding of the invention is used, the shape of the container after in-mold molding thereof is not damaged. In addition, when the label for in-mold molding of the invention is used, the labeled part is free from outward appearance failures such as wrinkles or blisters.

### BRIEF DESCRIPTION OF THE DRAWINGS

[Fig. 1] This is a cross-sectional view showing an example of layer configuration of the label for in-mold molding of the invention.
[Fig. 2] This is a cross-sectional view showing another example of layer configuration of the label for in-mold molding of the invention.

### MODE FOR CARRYING OUT THE INVENTION

The label for in-mold molding of the invention is described in detail hereinunder. The description of the constitutive elements of the invention given hereinunder is for some typical embodiments of the invention, to which, however, the invention should not be limited. In this description, the numerical range expressed by the wording "a number to another number" means the range that falls between the former number indicating the lowermost limit of the range and the latter number indicating the uppermost limit thereof.
The label for in-mold molding of the invention comprises a laminate configuration of a substrate layer and a heat-sealable layer. First described are the substrate layer and the heat-sealable layer in that order.

### [Substrate Layer]

### (Basic Configuration)

The substrate layer to constitute the label for in-mold molding of the invention is a stretched film formed of a resin composition containing an α-olefin-based copolymer having a melting point of from 105 to 170°C and a crystalline propylene-based resin.

### α-olefin-based Copolymer)

The α-olefin-based copolymer to constitute the substrate layer is a copolymer of at least one α-olefin and other monomer. Preferably, the α-olefin-based copolymer is a copolymer of propylene and at least one monomer selected from a group consisting of ethylene and α-olefins having at least 4 carbon atoms, more preferable a copolymer of propylene and at least one monomer selected from a group consisting of ethylene and α-olefins having from 4 to 20 carbon atoms, even more preferably a copolymer of propylene and at least one monomer selected from a group consisting of ethylene and α-olefins having from 4 to 12 carbon atoms.

α-olefins having at least 4 carbon atoms that are usable in the invention may be linear or branched ones. Those α-olefins having at least 4 carbon atoms concretely include 1-butene, 1-pentene, 1-hexene, 1-heptene, 1-octene, 1-nonene, 1-decene, 1-undecene, 1-dodecene, 3-methyl-1-butene, 3-methyl-1-pentene, 4-methyl-1-pentene, 4-methyl-1-hexene, 4,4-dimethyl-1-hexene, 4,4-dimetnyl-1-pencene, 4-ethyl-1-hexene, 3-ethyl-1-hexene, etc. Of those, preferred are 1-butene, 1-hexene, 1-decene and 1-dodecene, and more preferred is 1-butene. One or more such α-olefins may be used here either singly or as combined.

The content of propylene to be contained in the monomer mixture for use for obtaining the α-olefin-based copolymer is preferably from 45 to 97 mol%, more preferably from 50 to 93 mol%, even more preferably from 56 to 90 mol%. When the propylene content in the monomer mixture is too much, a disadvantage may readily occur in that suitable softness is difficult to obtain; and when too small, a disadvantage may also occur in that transparency could not be maintained

In case where a monomer selected from the group consisting of ethylene and α-olefins having at least 4 carbon atoms is used in tre monomer mixture for use for obtaining the α-olefin based copolymer, the content thereof is preferable from 3 to 55 mo%, more preferably from 7 to 50 mol%, even mole preferably from 10 to 44 mol%. When the content of ethylene and other α-olefin having at least 4 carbon atoms in the monomer mixture is too much, a disadvantage may readily occur in that transparency could not be maintained; and when too small, a disadvantage may also occur in that suitable softness is difficult to obtain.

In case where a monomer selected from the group consisting of ethylene and α-olefins having at least 4 carbon atoms is used, multiple monomers selected from the group may be used For example, both ethylene and an α-olefin having at least 4 carbon atoms may be used.

A concrete composition of the monomer mixture comprises, for example, from 45 to 89 mol% of propylene, from 10 to 25 mol% of ethylene and from 0 to 30 mol% of an α-olefin having at least 4 carbon atoms. In this, the propylene content is preferably from 45 to 80 mol%, more preferably from 50 to 75 mol%. The total content of ethylene and the α-olefin having at least 4 carbon atoms is preferably from 20 to 55 mol%, more preferably from 20 to 43 mol%.

The polymerization method for the monomer mixture is not specifically defined, for which, for example, suitably employed are methods generally used in producing α-olefin-based copolymers either selected or combined. Preferably, the α-olefin-based copolymer for use in the invention is a random copolymer.

The α-olefin-based copolymer for use in the invention has a melting point of from 135 to 160°C. The melting point as referred to herein is the maximum peak (Tm) of the endothermic curve in differential scanning calorimetry. The polymerization is so controlled that the melting point of the α-olefin-based copolymer to be obtained does not overstep the range of from 135 to 160°C. When the melting point is lower than 105°C, then the mixture may be readily melted by the heat in in-mold molding and the internal haze of the label may readily increase. On the contrary, when the melting point is higher than 170°C, then a disadvantage may readily occur in that the stress in stretching may be too large and a load may be given too much to the stretching machine.

Preferably, the α-olefin-based copolymer tor use in the invention has a melting heat quantity of from 1 to 40 J/g. The melting heat quantity as referred to herein means s the peak area of the endothermic curve in differential scaining calorimetry (DSC). More preferably, the melting heat quantity is from 3 to 30 J/g, even more preferably from 5 to 20 J/g. When the melting heat quantity is at least 1 J/g, then the mixture may be difficult to melt by the heat in in-mold molding; ana when at most 40 J/g, then those sheet stretching may be easy

Preferably, the α-olefin-based copolymer for use in the invention has a haze of a most 40%, when observed as a 1-mm sheet thereof formed by melt press molding, more preferably at most 30%. When the haze is at most 40%, then the stretched film can easily maintain transparency.

Preferably, the α-olefin-based copolymer for use in the invention has a molecular weight distribution (polystyrene-equivalent Mw/Mn in which Mw means the weight-average molecular weight of the copolymer and Mn means a number-average molecular weight thereof), as determined through GPC, of at most 4.0, more preferably within a range of from 1 5 to 3.0. Within the range, the stretched film to be obtained may have good transparency, scratch resistance and impart resistance.

As the α-olefin-based copolymer in the invention, usable are commercially-available α-olefin-based copolymers. For example, there may be mentioned Mitsui Chemical's Notio PN-2060 (trade name); Exxo Mobile's Vistamaxx VM1100 (trade name), etc.

The content of the α-olefin-based copolymer to be contained in the resin composition to constitute the substrate layer is preferably from 10 to 30% by weight, more preferably from 12 to 28% by weight, even more preferably from 15 to 25% by weight. When the content of the α-olefin-based copolymer is from 10 to 30% by mass, then the stretched film to be the substrate layer and the label containing it may readily have suitable softness.

### (Crystalline Propylene-based Resin)

As the crystalline propylene-based resin to constitute the substrate layer, preferably used is a propylene homopolymer (polypropylene) which is isotactic or syndiotactic or which has stereoregularity to different degrees, or a copolymer comprising propylene as the main ingredient thereof and prepared through copolymerization of propylene with ethylene or α-olefin having at least 4 carbon atoms. The copolymer may be a random copolymer or a block copolymer. The propylene content in the monomer mixture to be copolymerized is at least 80 mol%, and is preferably from 80 to 99 mol%, even more preferably from 85 to 95 mol% In case where an α-olefin having at least 4 carbon atoms is used in copolymerization, the carbon number is preferably from 4 to 20, more preferably from 4 to 12. For specific examples of the α-olefin having at least 4 carbon atoms usable here, referred to are the specific examples of α-olefins described hereinabove in the section of (α-olefin-based copolymer). The monomer mixture to proviae the crystalline propylene-based resin may contain different types of monomers except propylene. For securing the transparency of tne substrate layer, the α-olefin-based copolymer and the crystalline propylene-based resin to be used for forming the substrate layer are so combined that they can be well miscible with each other so as not to form a sea-island configuration by phase separation.

Regarding the physical properties of the crystalline propylene-based resin for use in the invention, for example, the melting point thereof is from 130 to 160°C. The melting heat quantity of the resin is preferably from 60 to 120 J/g, more preferably from 65 to 105 J/g, even more preferably from 70 to 90 J/g.

As the crystalline propylene-based resin in the invention, usable are commercially-available e crystalline propylene-based resins. For example, there may be mentioned Nippon Polypro's Novatec PP FW4BT (trade name) and Novatec PP FY4 (trade name), etc

The content of the crystalline propylene-based resin to be contained it the resin composition to consistute the substrate layer is preferably from 70 to 90% by weight, more preferably from 72 to 88% by weight, even more preferably from 75 to 85% by weight. When the content of the crystalline propylene-based resin is from 70 to 90% by weight, the stretched film to be the substrate layer and the label containing it may readily have suitable stiffness.

### (Other Ingredients)

The resin composition to constitute the substrate layer may contain any other ingredient than the above-mentioned α-olefin-based copolymer and crystalline propylene-based resin. As the ingredient, there may be mentioned other known additives for resin. Concretely, there may be mentioned a slip agent such as fatty acid amides, an antiblocking agent, a dye, a plasticizer, a lubricant, an antioxidant, a frame retardant, a UV absorbent, etc. These additives may be added within a range not detracting from the transparency, the softness, the stiffness and others that are intended to be attached by the invention The amount of the additives, if added, may be generally from 0 01 to 3% by weight, more preferably from 0.01 to 2% by weight, even more preferably from 0.01 to 1% by weight

The substrate layer in the invention may contain an inorganic fine power or an organic filler in an amount in which the internal haze of the label of the invention could be within a range of from 1 to 30% For example, usable is calcium carbonate, titanium oxide or the like. The content of the inorganic fine powder or the organic filler, if used, may be generally from 0.01 to 5% by weight, preferably from 0.01 to 2% by weight, but more preferably the content is zero.

### (Formation of Substrate layer)

The substrate layer may be formed by mixing an α-olefin-based copolymer, a crystalline propylene-based resin and any other optional ingredient to prepare a resin composition, then forming it into a sheet and stretching it. The resin composition may be prepared oy melting the resins at a high temperature, and adding the other optional ingredient thereto and kneading them. The melt-kneading temperature may be generally from 200 to 260°C, preferably from 210 to 250°C, more preferably from 220 to 240°C. The operation may be attained generally in an extruder, in which the resin composition is prepared and then sheetwise extruded through the die and cooled to form a sheet.

Afetr formed, the sheet is stretched and used as the substrate layer. The stretching may be monoaxial stretching or biaxial or more multi-axial stretching; however, the substrate layer is preferably a biaxally-stretched cne The areal draw ratio in biaxial stretching is preferably from 20 to 70 times, more preferably from 25 to 55 times, even more preferably from 30 to 50 times. When the areal draw ratio in stretching is from 20 to 70 times, the sheet can be suitably thinned to realize a uniform thickness and, in addition, its stiffness may be easy to control. For the biaxial stretching, the longitudinal stretching and the lateral stretching may be attained at the same time, or the longitudinal stretching and the lateral stretching may be attained sequentially. In the latter case, for example, there may he employed a method of first longitudinally stretching the substrate layer alone, then forming a heat-sealable layer or the like on the substrate layer, and thereafter laterally stretching the whole. In this, the draw ratio in the first longitudinal stretching is preferably from 3 to 6 times, more preferably from 3.5 to 5 times, even more preferably from 4 to 5 times. The dram ratio in the lateral stretching to be attained after the formation of the heat-sealable layer is preferably from 6.5 to 12 times, more preferably from 7 to 11 times, even more preferably from 7.5 to 10 times.

Preferably, the thickness of the substrate layer that constitutes the label of the invention is from 20 to 100 µm, more preferably from 30 to 80 µm, even more preferably from 35 to 65 µm.
The substrate layer in the invention has high transparency and additionally has suitable softness and stiffness. Accordingly, the substrate layer may impart high transparency, softness not causing container deformation and stiffness hardly causing wrinkles, to the label of the invention.

### [Heat-Sealable Layer]

The heat-sealable layer in the invention is transparent and is activated by the heat of the thermoplastic resin melted in in-mold molding to form a resin molded container, thereby acting to integrally sticking the label to the container.
The heat-sealable layer in the invention comprises a thermoplastic resin, and may be laminated on the substrate layer through extrusion molding in a mode of coextrusion or lamination, or may be laminated on the substrate layer according to a coating method of film formation from a solution or an emulsion of a thermoplastic resin. From the viewpoint of the transparency thereof, the layer is preferably formed through extrusion molding of a thermoplastic resin.

The thermoplastic resin to constitute the heat-sealable layer may be any one capable of being activated by the heat in in-mold molding, and is not specifically defined; but in general, preferred is use of an ethylene-based resin.
As the ethylene-based resin, preferred are those having a melting point of from 50 to 130°C, such as high-density polyethylene having a density of from 0.940 to 0.970 g/cm³, low-density or middle-density high-pressure process polyethylene having a density of from 0.900 to 0.935 g/cm³, linear polyethylene having a density of from 0.880 to 0.940 g/cm³, ethylene/α-olefin copolymer comprising ethylene as the main ingredient thereof, ethylene/vinyl acetate copolymer, ethylene/acrylic acid copolymer, ethylene/alkyl acrylate copolymer, ethylene/alkyl methacrylate copolymer (in which the alkyl group has from 1 to 8 carbon atoms), metal salt (Zn, Al, Li, K, Na or the like) of ethylene/methacrylic acid copolymer, etc

More preferred are high-pressure process polyethylene and linear polyethylene having a degree of crystallinity (by X-ray method) of from 10 to 60% and a number-average molecular weight of from 10,000 to 40,000. Above all, most suitable is linear polyethylene produced through copolymerization of from 40 to 98% by weight of ethylene and from 60 to 2% by weight of an α-olefin having from 3 to 30 carbon atoms, using a metallocene catalyst, especially a metallocene/alumoxane catalyst or a catalyst comprising a metallocene compound and a compound capable of reacting with the metallocene compound to form a stable anion, for example, as in WO92/01723, from the viewpoint of the adhesiveness thereof to container. These ethylene-based resins may be used here either singly or as a mixture of two or more of them.

Preferably, the melting point (maximum peak, Tm of the endothermic curve in differential scanning calorimetry) of the ethylene-based resin composition to constitute the heat-sealable layer is lower by at least 5°C than the melting point of the resin composition to constitute tne substrate layer. The respective resin composition are made to differ from each other in point of the melting point thereof by at least 5°C, thereby making it possible to so plan the label that the substrate layer does not melt even at a temperature at which the heat-sealable layer is melted and activated, and thereby more readily preventing the label deformation. The melting point difference is preferably from 50 to 90°C, more preferably from 53 to 82°C, even more preferably from 55 to 75°C.

The ingredients described in the above-mentioned section cf (Other Ingredients) may be added to the heat-sealable layer The amount to be added of the ingredients shall fall within a range not detracting from the transparency, the softness, the stiffness and others that are intended to be attained by the invention. The amount of the ingredients, if added, may be generally from 0.01 to 3% by weight, preferably from 0.01 to 2% by weight, more preferably from 0.01 to 1% by weight.

Preferably, the thickness of the heat-sealable layer is from 0 5 to 20 µm, more preferably from 1 to 5 µm. When the thickness of the heat-sealable layer is at least 0.5 µm, then the heat-sealable resin layer may be readily melted by the heat of the molten polyethylene or molten polypropylene of parison or the like during blow molding thereof, whereby the container of the shaped article and the label could be fused together more firmly. When the thickness is at most 5 µm, then the label hardly curls and could be inserted into tre correct position in blow molding, and the label may be hardly wrinkled.

### [Other Layers]

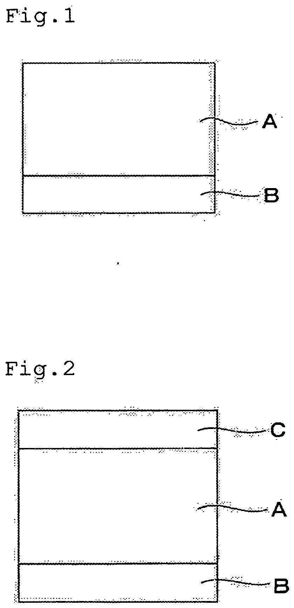

In the label for in-mold molding of the invention, a surface layer may be further provided and laminated on the surface of the substrate layer, in addition to the substrate layer and the heat-sealable layer therein. As the case may be, an interlayer may be provided and laminated between the substrate layer and the heat-sealable layer or between the substrate layer and the surface layer. Specifically, the label for in-mold molding of the invention may be a label comprising a laminate of substrate layer/heat-sealable layer (A/B) as shown in Fig. 1, and apart from it, may also be a label comprising a laminate of surface layer/substrate layer/ heat-sealable layer (C/A/B) as in Fig. 2 or the like. In addition to the laminate of Fig 2, further mentioned are other examples of a label that comprises a laminate of substrate layer/interlayer/heat-sealable layer, surface layer/substrate layer/interlayer/heat-sealable layer, surface layer/interlayer/substrate layer/heat-sealable layer, or surface layer/interlayer/substrate layer/interlayer/heat-sealable layer.

The surface layer may be so planned as to be able to contribute toward printability impartation, surface strength enhancement and high glossiness and other outward appearance betterment; and the interlayer may be so planned as to be able to contribute toward interlayer strength enhancement between the substrate layer and the heat-sealable layer and label strength adjustment for in-mold molding. The surface layer and the interlayer each are also formed of a thermoplastic resin, and may be provided acccording to an ordinary lamination method for film formation, for example, through coextrusion, lamination or the like. As the thermoplastic resinto constitute the surface layer and the interlayer, there may be mentioned films of polyolefin-based resins such as propylene-based resin, high-density polyethylene, middle-density polyethylene, linear low-density polyethylene, α-olefin-based copolymer, ethylene/vinyl acetate copolymer, ethylene/acrylic acid copolymer, ethylene/alkyl acrylate copolymer, ethylene/alkyl methacrylate copolymer (in which the alkyl group has from 1 to 8 carbon atoms), metal salt of ethylene/methacrylic acid copolymer, poly-4-methyl-1-pentene, ethylene/cyclic olefin copolymer, etc.; polyethylene terephthalate resins; polyvinyl chloride resins; polyamide-based resins such as nylon-6, nylon-6,6, nylon-6,10, nylon-6,12, etc.; ABS resins; ionomer resins, etc. Preferred are thermoplastic resins having a melting point of from 105 to 280°C, such as propylene-based resins, high-density polyethylene, polyethylene terephthalate resins, etc. Two or more these resins may be used here as mixed. Of those, more preferred are propylene-based resins and high-density polyethylene from the viewpoint of the cost, the waterproofness and the chemical resistance thereof.

The ingredients described in the above-mentioned section of (Other Ingredients) may be added to the surface layer and the interlayer. The amount to be added of the ingredients shall fall within a range not detracting from the transparency, the softness, the stiffness and others that are intended to be attained by the invention. The amount of the ingredients, if added, may be generally from 0.01 to 3% by weight, preferably from 0.01 to 2% by weight, more preferably from 0.01 to 1% by weight.

### [Label for In-Mold Molding]

### (Thickness)

The thickness of the entire label is generally within a range of from 50 to 120 µm, preferably from 60 to 100 µm. When the thickness of the entire label is at least 50 µm, then the label may be readily inserted into the correct position in blow molding and the label may be hardly wrinkled. When at most 120 µm, then the tensile strength of the substrate may be kept on a suitable level and therefore the shape of the in-mold molded container may be hardly damaged and the drop-resistant strength of the container could be high.

### (Physical Properties)

The label for in-mold molding of the invention is transparent. According to JIS K7136, 10 label samples are sandwiched between two glass slides, and the space between the glass and the sample and between the samples are filled with liquid paraffin so that there could exist no air space in the sample configuration, and the internal haze measured under the condition (for the stack of ten labels) is from 1 to 3%, preferably from 5 to 20%, more preferably from 8 to 15%. When the internal haze (for a stack of 10 labels) is at most 30% then the label can keep the transparency thereof when stuck to a container, and therefore does not detract from the outward appearance and the texture of bottles.

In haze measurement in the invention, 10 label samples are stacked, and the reason is because both the labels of the invention and ordinary labels are highly transparent in some degree, and therefore there could hardly appear a difference between the found data when one sample alone is measured. In haze measurement for the "internal haze" of the products of the invention, the reason why the space between the samples is filled with liquid paraffin so that there could sexist no air space in the sample configuration is for the purpose of preventing the reduction in the found data owing to light refraction in the interface of label/air space owing to surface irregularities such as embosses, etc.
As described below, in the products of tre invention, the heat-sealable layer is preferably embossed. However, when the label is integrated with the resin molded container, the light refraction in the interface of label/air space owing to such surface irregularities may be ignored. Accordingly, in the invention, the internal haze is employed in measurement of the haze intrinsic to tne label substrate, taking liquid paraffin as a pseudo-container.

The tensile strength, as measured according to JIS K7113, of the label for in-mold molding of the invention is generally from 30 to 150 kgf/cm, preferably from 40 to 150 Kgf/cm, more preferably from 50 to 140 kgf/cm. The tensile elasticity, as measured according to JIS K7113, is generally from 0.5 to 2 GPa, preferably from 0.6 to 1.9 GPa, more preferably from 0.7 to 1.8 GPa. The clark stiffness, as measured according to JIS P8143, is generally from 5 to 20 cm³, preferably from 6 to 19 cm³, more preferably from 7 to 18 cm³.
The label for in-mold molding comprises a substrate layer of a stretched film. However, depending on the grain direction and the draw ratio in stretching of the stretched firm, the numerical range may vary even though the film is formed of the same material.

The tensile strength of the label for in-mold molding of the invention is from 30 to 150 kgf/cm; however, when the label is cut out of the film, the grain direction thereof is not defined, and therefore, the tensile strength is defined as the total of the film not depending on the grain direction thereof; and more precisely, the tensile strength, as measured in the film traveling direction (machine direction, MD), is preferably within a range of from 30 to 80 kgf/cm and the tensile strength, as measured in the film crossing direction (transverse direction, TD), is preferably from 80 to 150 kgf/cm.
Similarly, the tensile elasticity, as measured in the film traveling direction, is preferably from 0 5 to 1.1 GPa, and the tensile elasticity, as measured in the film crossing direction, is preferably from 1 to 2 GPa; and the Clark stiffness, as measured in the film traveling direction, is preferably from 5 to 10 cm³, and the Clark stiffness, as measured in the film crossing direction, is preferably from 10 to 20 cm³.

In case where the tensile strength is at most 150 kgf/cm, the tensile elasticity is at most 2 GPa and the Clark stiffness is at most 20 cm³, the label may hardly extract from the shape of the molded containers when stuck thereto. Accordingly, adjustment of molds like in ordinary methods would be unnecessary.
On the other hand, in case where the tensile strength is at least 30 kgf/cm, the tensile elasticity is at least 0.5 GPa and the Clark stiffness is at least 5 cm³, the labeled part may be free from appearance failures such as shrinks or blisters.

### (Embossing)

As described above, the heat-sealable layer of the label may be embossed as in JP-A 2-84319 and 3-260689. The embossed decoration preferably has from 5 to 300 embossing lines per 2.54 cm (1 inch), for which any pattern of gravure types, pyramid types, diagonal types or inverse types thereof may be transferred. More preferably, using a roll embossed with an inverse gravure-type pattern, the label is so processed that a gravure-type pattern could be transferred onto the heat-sealable layer side thereof. The embossing may be attained during cooling by a cast roll as described above, or the pattern may be transferred by reheating after cooling. The embossing is preferred as effectively preventing blisters (partial swellings of label) to be generated by air to remain in the space between the label and the container.

### (Surface Processing)

The label for in-mold molding may be optionally processed through corona discharge treatment or the like to thereby improve the printability on the surface of the substrate layer (or on the surface of the surface layer). Further, within a range not interfering with the transparency, a known coating layer capable of improving the printability may be provided by coating.
Regarding the printing, design or information of barcode, manufacturer, dealer, character, trade name, usage and the like may be given to the label, according to a method of gravure printing, cffset printing, flexographic printing, screen printing or the like.
The printed label for in-mold molding is used generally after blanked out into the label having the necessary shape and dimension thereof. The label may be a partial one to be stuck to a part of the surface of a container, but is, in general, produced as a blank to surround the side surface of a cup-shaped container or as a label to be stuck tc the surface and/or the back of a bottle-shapel container in blow molding.

### [In-Mold Molding]

The label for in-mold molding of the invention can be used as a label for in-mold molding of containers in a mold in a mode of blow molding, injection molding, differential pressure molding, foam molding or the like. As one specific example of in-mold molding, for example, there may be mentioned a mode of differential pressure molding in which the label is arranged in a differential pressure molding mold in such a manner that the s .face of the substrate layer (or printed layer) of the label could be kept in contact with the inner surface of a lower female mold part of the mold, then the label is fixed in the inner wall of the mold by suction, and thereafter a melt of a resin sheet of a container-forming material is introduced toward the upper side of the lower female mold part and then molded in a mode cf differential pressure moldine in the mold, thereby producing a labeled container in which the label is integrally stuck to the outer surface of the container. For the differential pressure molding, employable is any of vacuum molding or pressure molding, but in general, preferred is a mode of differential pressure molding in which the two are combined with using a plug assist

The label is favorably used as an in-mold label for blow molding in which a molten resin parison is pressed against the inner wall of a mold by pressure.
In the labeled container thus produced, the label is fixed in the mold and then the label is integrally molded with the resin container, and in this, therefore, the label is not deformed and the adhesion strength between the container body and the label is nigh, and with no blisters, the container may have a good outward appearance decorated with the label.
Further, the label can follow the mold shrinkage of the molded container, and therefore does not give stress to the container and does not detract from the shape of the container.

### EXAMPLES

The invention is described more concretely with reference to Examples and Comparative Examples given below. In the following Examples, the material used, its amount and ratio, the details of the treatment and the treatment process may be suitably modified or changed not overstepping the sprit and the scope of the invention. Accordingly, the technical scope of the invention should not be limited by the following specific examples.

### <Example 1>

(1) A resin composition (A) comprising 20% by weight of an α-olefin-based copolymer having a melting point of 138°C and a melting heat quantity of 13.5 J/g (Mitsui Chemical's trade name, Notio PN-2060), and 80% by weight of a polypropylene resin (Nippon Polypro's trade name, Novatec PP FW4BT) was melt-kneaded with an extruder at a temperature of 250°C, then extruded out through the die into a sheet, and the sheet was cooled to a temperature of about 50°C. Next, the sheet was heated at 140°C, and stretched by 4.8 times in the longitudinal direction (sheet traveling direction by utilizing the peripheral speed difference between the rolls thereby giving a monoaxially-stretched film.
(2) Apart from the above, a composition (C) comprising 50% by weight of a propylene-based resin (Nippon Polypro's trade name, Novatec PP MA3) and 50% by weight of a high-density polyethylene (Nippon Polyethylene's trade name, Novatec HD HJ381) was melt-kneaded with an extruder at 240°C, then extruded out t rough the die into a sheet, and this was laminated on one side of the above-mentioned, monoaxially-stretched film thereby giving a laminate having a configuration of surface layer/substrate layer (C/A)
(3) Apart from the above, a resin composition (B) comprising 70% by weight of an ethylene/α-olefin copolymer having a melting point of 78°C (Dow Chemical Japan's trade name, Engage 8401, having a density of 0.898 g/cm³), and 30% by weight of a high-pressure-process low-density polyethylene having a melting point of 110°C (Nippon Polyethylene's trade name, Novatec LD LJ902, having MFR of 4 g/10 min and a density of 0.92 g/cm³) was melt-kneaded with an extruder at 240°C, then extruded out through the die into a sheet, and this was laminated on the surface side of the substrate layer (layer A) of the above-mentioned laminate (C/A) thereby giving a laminate e having a configuration of surface layer/substrate layer/heat-sealable layer (C/A/B) as shown in Fig. 2 Further, while the resin composition (B) was in a molten state, the laminate was led to pass through an embossing roll (inverse gravure-type pattern with 150 lines/inch) and a rubber roll whereby the surface of the heat-sealable layer thereof was embossed with a 0.17-mm pitched patters.
(4) The three-layer laminate (C/A/B) was introduced into a tenter oven, reheated up to 140°C therein, then stretched by 9 times in the transverse direction (sheet grossing direction), and subsequently annealed at 150°C, then cooled, and trimmed on both edges thereof. Further, the side of the surface layer (layer C) was corona-discharged at a power of 73 W/m²/min thereby giving a label for in-mold molding (label base).

### <Example 2>

A label for in-mold molding was produced according to the same method as in Example 1, except that the resin discharge rate in the step (1) in Example 1 was changed and that the step (2) was omitted so as not to laminate the surface layer (C). The label for in-moldmolding is a laminate having a configuration of substrate layer/heat-sealable layer (A/B) as in Fig. 1

### <Examples 3 to 5>

A label for in-mold molding was produced according to the same method as in Example 1, except that the composition of the substrate layer (layer A) was changed as in Table 1. The melting point of the α-olefin-based copolymer (ExxonMobile's trade name, Vistamaxx VM1100) used in Example 5 is 156°C, and the melting heat quantity thereof is 5.6 J/g.

### <Comparative Example 1>

A label for in-mold molding was produced according to the same method as in Example 1, except that the composition of the substrate layer (layer A) was changed as in Table 1. The melting point of the α-olefin-based copolymer (Dow Chemical Japan's trade name, Versify DP3200) used in Comparative Example 1 is 99°C, and the melting heat quantity thereof is 41 J/g.

### <Comparative Example 2>

(1) A resin composition (A) comprising 91% by weight of a propylene homopolymer (Nippon Polypro's trade name, Novatec PP FY4, having a melting point of 164°C), 8% by weight of a high-density polyethylene (Nippon Polyethylene's trade name, Novatec HD HJ381, having a melting point of 134°C and a density of 0.960 g/cm³), and 1 % by weight of a heavy calcium carbonate powder (Bihoku Funka Kogyo's trade name, Softon 1500, having a mean particle size of 1 5 µm (in catalog)) was melt-kneaded with an extruder at a temperature of 250°C, then extruded out through the die into a sheet, and the sheet was cooled to a temperature of about 50°C. Next, the sheet was heated at 153°C, and stretched by 4 times in the longitudinal direction by utilizing the peripheral speed difference between the rolls thereby giving a monoaxially-stretched film.
(2) Apart from the above, a composition (C) comprising 50% by weight of a propylene-based resin (Nippon Polypro's trade name, Novatec PP MA3) and 50% by weight of a high-density polyethylene (Nippon Polyethylene's trade name, Novatec HD HJ381) was melt-kneaded with an extruder at 240°C, then extruded out through the die into a sheet, and this was laminated on one side of the above-mentioned, monoaxially-stretched film thereby giving a laminate having a configuration of surface layer/substrate layer (C/A).
(3) Apart from the above, a resin composition (B) comprising 70% by weight of an ethylene/1-hexene copolymer having a melting point of 90°C (Nippon Polyethylene's trade name, Karnel KS240T, a copolymer produced through copolymerization of ethylene and 1-hexene with a metallocene catalyst, having a 1-hexene content of 22% by weight, a degree of crystallinity of 30%, a number-average molecular weight of 23000, MFR of 18 g/10 min, a density or 0.898 g/cm³), and 30% by weight of a high-pressure-process low-density polyethylene having a meltingpoint of 110°C (Nippon Polyethylene's tradename, Novatec LD LJ902, having MFR of 4 g/10 min and a density of 0.92 g/cm³) was melt-kneaded with an extruder at 240°C, then extruded out through the die into a sheet, and this was laminated on the surface side of the substrate layer (layer A) of the above-mentioned laminate (C/A) thereby giving a laminate having a configuration of surface layer/substrate layer/heat-sealable layer (C/A/B). Further, while the resin composition (B) was in a molten state, the laminate was led to pass through an embossing roll (inverse gravure-type pattern with 150 lines/inch) and a rubber roll whereby the surface of the heat-sealable layer thereof was embossed with a 0.17-mm pitched pattern.
(4) The three-layer laminate (C/A/B) was introduced into a tenter oven, reheated up to 160°C therein, then stretched by 9 times in the transverse direction (sheet crossing direction), and subsequently annealed at 165°C, then cooled, and trimmed on both edges thereof. Further, the side of the surface layer (layer C) was corona-discharged at a power of 70 W/m²/min thereby giving a label for in-mold molding (label base

### <Comparative Example 3>

As the resin composition (A) to constitute the substrate layer (A), used was 100% by weight of a propylene homopolymer (Nippon Polypro's trade name, Novatec PP MA3); as the resin composition (C) to constitute the surface layer (C), used was a mixture of 50% by weight of a propylene homopolymer (Nippon Polypro's trade name, Novatec PP MA3), 20% by eight of a propylene homopolymer (Nippon Polypro's trade name, Novatec PP FB3C) and 30% by weight of a maleic acid-modified ethylene/vinyl acetate copolymer (Mitsubishi Chemical's trade name, Modic-AP), as the resin composition (B) to constitute the heat-sealable layer (B), used was 10% by weight of an ethylene/1-hexene copolymer (Nippon Polyethylene's trade name, Karnel KS240T).

These resin compositions were separately melt-kneaded in different extruders at 240°C, fed into one coextrusion T-die so as to be C/A/B therein, and laminated inside the T-die in 3 layers, and extruded cut through the T-die into a sheet at 240°C This was introduced between a semi-mirrored chill roll (kept in contact with the layer (C)) and a matted rubber roll (kept in contact with the layer (B)), and while cooled therebetween under a compression pressure (linear pressure of about 1.5 kg/cm), this was introduced into a corona discharger as assisted by guide rolls, and the surface of the surface layer (C) thereof was corona-discharged therein at a power of 50 W/m²/min, then this was trimmed on both edges thereof, and wound up with a winder to give a label for in-mold molding (label base). The label for in-mold molding corresponds to Example 1 in Patent Reference 3 (JP-A 2006-276848).

### <Measurement>

The labels for in-mold molding (label bases) produced in Examples 1 to 5 and Comparative Examples 1 to 3 were measured in point of the following.
(1) Density:
   Measured according to JIS K7112.
(2) Tensile Strength:
   Measured according to JIS K7113.
(3) Tensile Elasticity.
   Measured according to JIS K7113.
(4) Clark Stiffness:
   Measured according to JIS P8143
(5) Internal Haze (for stack of ten labels) :
   Using a Nippon Denshoku's haze meter, NDH2000, this was measured according to JIS K7136. The internal haze (for a stack of ten labels) was measured as follows: Ten samples were sandwiched between two glass slides (Matsunami Glass Industry's trade name, S-7213, bluish edge-polished Precleun, having a thickness of from 0.9 to 1.2 mm), and the space between the glass and the sample and those between the samples were filled with liquid paraffin (by Wako Pure Chemical Industry, for IR analysis), and in the condition with no air space therein, the sample system was analyzed.

### <Evaluation>

The label for in-mold molding (label base) produced in Examples 1 to 5 and Comparative Examples 1 to 3 was blanked to give a rectangular sample having a width of 110 mm and a length of 170 mm. In this, the label was so blanked that the tenter-stretching direction thereof could be the lengthwise direction of the sample The thus-blanked label sample was set in one part of split molds for blow molding (capacity, 3 L) by utilizing a vacuum force in such a manner that the heat-sealable side thereof could be kept in contact with container, then a parison of polypropylene (Nippon Polypro's Novatec PP EG8) was melt-extruded, the split molds were clamped, pressurized air was fed into the parison so that the parison was expanded and closely adhered to the mold and at tne same time fused to the label for in-mold molding, thereafter the mold was cooled and opened, and the labeled blow-molded article was taken out.

### (1) Deformation of Container in Labeling.

One day after the molding thereof, the shape of the molded article was checked and evaluated as according to the following standards.
○○: There is little difference from the shape of the unlabeled container.
○: There is a little deformation of the container, but the mold modification is unnecessary
×: As the shape of the container is worsened, the mold must be modified.

### (2) Appearance Failure of Labeled Part:

One day after the molding thereof, four continuously molded containers were checked for the outward appearance thereof and evaluated as according to the following standards.
○: No failure of wrinkles or blisters is seen at all in the appearance of the adhered label.
×: Some failures of wrinkles or blisters are seen in the appearance of the adhered label.

**[Table 1]**

| | | | Melting Point ((C) | Melting Heat Quantity (J/g) | Starting Material Blend Ratio (% by weight) | | | | | | | |
|---|---|---|---|---|---|---|---|---|---|---|---|---|
| | | | | | Example | | | | | Comparative Example | | |
| | | | | | 1 | 2 | 3 | 4 | 5 | 1 | 2 | 3 |
| Surface Layer (C) | Thermoplastic Resin | Nippon Polypro's Novatec PP MA3 | 164 | | 50 | - | 50 | 50 | 50 | 50 | 50 | 50 |
| | | Nippon Polypro's Novatec PP FB3C | 164 | | - | - | - | - | - | - | - | 20 |
| | | Mitsubishi Chemical's Modic-AP | 133 | | - | - | - | - | - | - | - | 30 |
| | | Nippon Polyethylene's Novatec HD HJ381 | 134 | | 50 | - | 50 | 50 | 50 | 50 | 50 | - |
| | α-olefin-based Copolymer | Mitsui Chemical's Notio PN-2060 | 138 | 13.5 | 20 | 20 | 15 | 10 | - | - | - | - |
| | | Exxon Mobile's Vistamaxx VM1100 | 156 | 5.6 | - | - | - | - | 20 | - | - | - |
| | | Dow Chemical Japan's Versify DP3200 | 99 | 40.8 | - | - | - | - | - | 20 | - | - |
| Substrate Layer (A) | Crystalline Polypropylene Resin | Nippon Polypro's Novatec PP FW4BT | 135 | 77.2 | 80 | 80 | 85 | 90 | 80 | 80 | - | - |
| | | Nippon Polypro's Novatec PP FY4 | 164 | 99.8 | - | - | - | - | - | - | 91 | - |
| | | Nippon Polypro's Novatec PP MA3 | 164 | 103 | - | - | - | - | - | - | - | 100 |
| | Others | Nippon Polyethylene's Novatec HD HJ381 | 134 | 179 | - | - | - | - | - | - | 8 | - |
| | | Bihoku Hunka Kogyo's Softon 1500 | - | - | - | - | - | - | - | - | 1 | - |
| Heat-Sealable Layer(B) | α-olefin-based Copolymer | Dow Chemical Japan's Engage 8401 | 78 | | 70 | 70 | 70 | 70 | 70 | 70 | - | - |
| | | Nippon Polyethylene's Karnel KS240T | 90 | | - | - | - | - | - | - | 70 | 100 |
| | Ethylene-based Resin | Nippon Polyethylene's Novatec LD LJ902 | 110 | | 30 | 30 | 30 | 30 | 30 | 30 | 30 | - |

**[Table 2]**

| | | | Example | | | | | Comparative Example | | |
|---|---|---|---|---|---|---|---|---|---|---|
| | | | 1 | 2 | 3 | 4 | 5 | 1 | 2 | 3 |
| Layer and Thickness | Layer Configuration | | C/A/B | A/B | C/A/B | C/A/B | C/A/B | C/A/B | C/A/B | C/A/B |
| | Thickness of Layer (µm) | | 20/40/20 | 60/20 | 20/40/20 | 20/40/20 | 20/40/20 | 20/40/20 | 20/37/18 | 10/80/10 |
| Measured Results | Density (g/cm3) | | 0,88 | 0.88 | 0.88 | 0.88 | 0.88 | 088 | 0.90 | 0.90 |
| | Tensile Strength (kgf/cm) | MD | 55 | 53 | 60 | 63 | 60 | 65 | 170 | 80 |
| | | TD | 128 | 123 | 140 | 150 | 140 | 150 | 420 | 80 |
| | Tensile Elasticity (GPa) | MD | 0.7 | 0.7 | 0.8 | 0.9 | 0.8 | 0.9 | 2.2 | 1.0 |
| | | TD | 1.6 | 1.5 | 1.8 | 1.9 | 1.8 | 1.9 | 5.0 | 1.0 |
| | Clark Stiffness (cm3) | MD | 7 | 7 | 8 | 8 | 8 | 9 | 20 | 10 |
| | | TD | 17 | 16 | 18 | 18 | 18 | 19 | 45 | 10 |
| | Internal Haze (%) | | 10 | 10 | 11 | 10 | 12 | 32 | 85 | 60 |
| | Deformation of Container in Labelling | | ○ | ○ | ○ | ○ | ○ | ○ | × | ⊚ |
| | Appearance Failure of Labeled Part | | ○ | ○ | ○ | ○ | ○ | ○ | ○ | × |

### INDUSTRIAL APPLICABILITY

Use of the label for in-mold molding of the invention does not detract from the shape of the in-mold folded container, and therefore does not require any additional mold modification. Use of the label for in-mold molding of the invention does not generate appearance failures such as wrinkles or blisters in the labeled part, and secures good ink adhesiveness. Accordingly, the invention contributes toward increasing and bettering the producibility, the production yield and the outward appearance of transparent containers labeled with a label for in-moldmolding, and the industrial contribution of the invention is great.

### DESCRIPTION OF REFERENCE SIGNS

A Substrate Layer
B Heat-Sealable Layer
C Surface layer

## Claims

1. A label for in-mold molding, which comprises a laminate configuration of a substrate layer and a heat-sealable layer,
wherein the substrate layer is a stretched film formed of a resin composition comprising an α-olefin-based copolymer having a melting point of from 135 to 160°C and a crystalline propylene-based resin having a melting point of from 130 to 160°C, and
the label has an internal haze of from 1 to 30% for a stack of ten labels,
wherein the α-olefin-based copolymer is a polymer of a monomer mixture comprising from 45 to 97 mol% of propylene and from 3 to 55 mol% of at least one selected from the group consisting of ethylene and α-olefins having 4 to 20 carbon atoms.

2. The label for in-mold molding according to claim 1, therein the substrate layer is a stretched film formed of a resin composition comprising from 10 to 30% by weight of the α-olefin-based copolymer and from 70 to 90% by weight of the crystalline propylene-based resin.

3. The label for in-mold molding according to any one of claims 1 and 2, wherein the melting heat quantity of the α-olefin-based copolymer is from 1 to 40 J/g.

4. The label for in-mold molding according to claim 3,
wherein the substrate layer is a stretched film formed of a resin composition comprising from 10 to 30% by weight of an α-olefin-based copolymer, and from 70 to 90% by weight of a crystalline propylene-based resin, and
the α-olefin-based copolymer is a polymer of a monomer mixture comprising from 45 to 97 mol% of propylene, and from 3 to 55 mol% of at least one selected from the group consisting of ethylene and α-olefin having from 4 to 20 carbon atoms.

5. The label for in-mold molding according to any one of claims 1 to 4, wherein the heat-sealable layer is a stretched film of a resin composition comprising an α-olefin-based copolymer.

6. The label for in-mold molding according to any one of claims 1 to 5, wherein the tensile strength of the label for in-mold molding is from 30 to 150 kgf/cm.

7. The label for in-mold molding according to any one of claims 1 to 6, wherein the tensile elasticity of the label for in-mold molding is from 0.5 to 2 GPa.

8. The label for in-mold molding according to any one of claims 1 to 7, wherein the Clark stiffness of the label for in-mold molding is from 5 to 20 cm³.

9. The label for in-mold molding according to any one of claims 1 to 8, wherein the stretched film is a biaxially stretched film.

10. The label for in-mold molding according to claim 9, wherein the areal draw ratio of the stretched film is from 20 to 70 times.

11. The label for in-mold molding according to any one of claims 1 to 10, wherein melting point of the resin composition to constitute the heat-sealable layer is lower by at least 5°C than the melting point of the resin composition to constitute the substrate layer.

## Patentansprüche

1. Label für ein In-Mould-Gießverfahren, das eine Laminatkonfiguration einer Substratschicht und einer heißsiegelfähigen Schicht umfasst,
wobei die Substratschicht eine gestreckte Folie ist, die aus einer Harzzusammensetzung gebildet ist, welche ein α-Olefin basiertes Copolymer, welches einen Schmelzpunkt von 135 bis 160°C aufweist, und ein kristallines Propylenbasiertes Harz, welches einen Schmelzpunkt von 130 bis 160°C aufweist, umfasst, und
wobei das Label eine innere Eintrübung von 1 bis 30% für einen Stapel von zehn Labels aufweist,
wobei das α-Olefin basierte Copolymer ein Polymer aus einer Monomermischung ist, welche 45 bis 97 Mol-% Propylen und 3 bis 55 Mol-% von mindestens einem, ausgewählt aus der Gruppe bestehend aus Ethylen und α-Olefinen umfasst, die 4 bis 20 Kohlenstoffatome aufweisen.

2. Label für ein In-Mould-Gießverfahren nach Anspruch 1, wobei die Substratschicht eine gestreckte Folie ist, die aus einer Harzzusammensetzung gebildet ist, welche von 10 bis 30 Gew.-% des α-Olefin basierten Copolymers und von 70 bis 90 Gew.-% des kristallinen Propylen-basierten Harzes umfasst.

3. Label für ein In-Mould-Gießverfahren nach einem der Ansprüche 1 und 2, wobei die Schmelzwärmemenge des α-Olefin basierten Copolymers 1 bis 40 J/g beträgt.

4. Label für ein In-Mould-Gießverfahren nach Anspruch 3,
wobei die Substratschicht eine gestreckte Folie ist, die aus einer Harzzusammensetzung gebildet ist, welche von 10 bis 30 Gew.-% eines α-Olefin basierten Copolymers und von 70 bis 90 Gew.-% eines kristallinen Propylen-basierten Harzes umfasst, und
das α-Olefin basierte Copolymer ein Polymer aus einer Monomermischung ist, welche von 45 bis 97 Mol-% Propylen und von 3 bis 55 Mol-% von mindestens einem, ausgewählt aus der Gruppe bestehend aus Ethylen und α-Olefin umfasst, das 4 bis 20 Kohlenstoffatome aufweist.

5. Label für ein In-Mould-Gießverfahren nach einem der Ansprüche 1 bis 4, wobei die heißsiegelfähige Schicht eine gestreckte Folie aus einer Harzzusammensetzung ist, die ein α-Olefin basiertes Copolymer umfasst.

6. Label für ein In-Mould-Gießverfahren nach einem der Ansprüche 1 bis 5, wobei die Zugfestigkeit des Labels für ein In-Mould-Gießverfahren 30 bis 150 kgf/cm beträgt.

7. Label für ein In-Mould-Gießverfahren nach einem der Ansprüche 1 bis 6, wobei das Zugelastizitätsmodul des Labels für ein In-Mould-Gießverfahren 0,5 bis 2 GPa beträgt.

8. Label für ein In-Mould-Gießverfahren nach einem der Ansprüche 1 bis 7, wobei die Clark-Steifigkeit des Labels für ein In-Mould-Gießverfahren 5 bis 20 cm³ beträgt.

9. Das Label für ein In-Mould-Gießverfahren nach einem der Ansprüche 1 bis 8, wobei die gestreckte Folie eine biaxial gestreckte Folie ist.

10. Das Label für ein In-Mould-Gießverfahren nach Anspruch 9, wobei das Flächenreckverhältnis der gestreckten Folie 20 bis 70-fach ist.

11. Das Label für ein In-Mould-Gießverfahren nach einem der Ansprüche 1 bis 10, wobei Schmelzpunkt der Harzzusammensetzung, welche die heißsiegelbare Schicht bildet, um mindestens 5°C geringer ist als der Schmelzpunkt der Harzzusammensetzung, welche die Substratschicht bildet.

## Revendications

1. Etiquette pour moulage à l'intérieur d'un moule, laquelle comprend une configuration stratifiée d'une couche de substrat et d'une couche thermoscellable,
dans laquelle la couche de substrat est un film étiré constitué d'une composition de résine comprenant un copolymère à base d'oléfine-α ayant un point de fusion de 135 à 160°C et d'une résine à base de propylène cristallin ayant un point de fusion de 130 à 160°C, et
l'étiquette présente un voile interne de 1 à 30 % pour une pile de dix étiquettes,
dans laquelle le copolymère à base d'oléfine-α est un polymère d'un mélange de monomères comprenant de 45 à 97 % en mol de propylène et de 3 à 55 % en mol d'au moins un choisi dans le groupe constitué de l'éthylène et d'oléfines-α ayant de 4 à 20 atomes de carbone.

2. Etiquette pour moulage à l'intérieur d'un moule selon la revendication 1, dans laquelle la couche de substrat est un film étiré constitué d'une composition de résine comprenant de 10 à 30 % en poids du copolymère à base d'oléfine-α et de 70 à 90 % en poids de la résine à base de propylène cristalline.

3. Etiquette pour moulage à l'intérieur d'un moule selon l'une quelconque des revendications 1 et 2, dans laquelle la quantité de chaleur de fusion du copolymère à base d'oléfine-α est de 1 à 40 J/g.

4. Etiquette pour moulage à l'intérieur d'un moule selon la revendication 3,
dans laquelle la couche de substrat est un film étiré constitué d'une composition de résine comprenant de 10 à 30 % en poids d'un copolymère à base d'oléfine-α, et de 70 à 90 % en poids d'une résine à base de propylène cristallin, et
le copolymère à base d'oléfine-α est un polymère d'un mélange de monomères comprenant de 45 à 97 % en mol de propylène, et de 3 à 55 % en mol d'au moins un choisi dans le groupe constitué par l'éthylène et une oléfine-α ayant de 4 à 20 atomes de carbone.

5. Etiquette pour moulage à l'intérieur d'un moule selon l'une quelconque des revendications 1 à 4, dans laquelle la couche thermoscellable est un film étiré d'une composition de résine comprenant un copolymère à base d'oléfine-α.

6. Etiquette pour moulage à l'intérieur d'un moule selon l'une quelconque des revendications 1 à 5, dans laquelle la résistance à la traction de l'étiquette pour moulage à l'intérieur d'un moule est de 30 à 150 kgf/cm.

7. Etiquette pour moulage à l'intérieur d'un moule selon l'une quelconque des revendications 1 à 6, dans laquelle l'élasticité de traction de l'étiquette pour moulage à l'intérieur d'un moule est de 0,5 à 2 GPa.

8. Etiquette pour moulage à l'intérieur d'un moule selon l'une quelconque des revendications 1 à 7, dans laquelle la raideur Clark de l'étiquette pour moulage à l'intérieur d'un moule est de 5 à 20 cm³.

9. Etiquette pour moulage à l'intérieur d'un moule selon l'une quelconque des revendications 1 à 8, dans laquelle le film étiré est un film biaxialement étiré.

10. Etiquette pour moulage à l'intérieur d'un moule selon la revendication 9, dans laquelle le rapport d'étirage aréolaire du film étiré est de 20 à 70 fois.

11. Etiquette pour moulage à l'intérieur d'un moule selon l'une quelconque des revendications 1 à 10, dans laquelle le point de fusion de la composition de résine pour constituer la couche thermoscellable est inférieur d'au moins 5°C au point de fusion de la composition de résine pour constituer la couche de substrat.
